Europäisches Patentamt

(19) European Patent Office

Office européen des brevets

(11) Publication number: **0 250 074**
**A2**

# (12) EUROPEAN PATENT APPLICATION

(21) Application number: **87303784.0**

(22) Date of filing: **29.04.87**

(51) Int. Cl.⁴: **A 23 B 4/10**, A 23 B 4/00

(30) Priority: **20.05.86 US 865317**

(43) Date of publication of application: **23.12.87**
**Bulletin 87/52**

(84) Designated Contracting States: **AT BE CH DE ES FR GB GR IT LI LU NL SE**

(71) Applicant: **OSCAR MAYER FOODS CORPORATION, 910, Mayer Avenue, Madison Wisconsin 53707 (US)**

(72) Inventor: **Ande, Charles F., 41C North Hart Road, Sun Prairie Wisconsin 53590 (US)**
Inventor: **Underhill, Frederick A., 4404 Wallace Avenue, Monona Wisconsin 53716 (US)**

(74) Representative: **Huskisson, Frank Mackie, 2 Park Street, Windsor, Berkshire SL4 1LU (GB)**

(54) **A foodstuff having a surface coating of lactate salt.**

(57) A method for preserving a cooked meat foodstuff which comprises cooking the meat product and then surface coating the cooked meat product with a lactate salt. The coated material is then vacuum packaged for distribution.

ACTORUM AG

Case 3497

# A COOKED MEAT FOODSTUFF
## COATED WITH A LACTATE SALT

## FIELD OF THE INVENTION

This invention relates to a cooked meat foodstuff coated with a lactate salt in amounts effective to increase the shelf-life of said cooked meat product.

## DESCRIPTION OF THE PRIOR ART

The preservation of foodstuffs has many aspects. For example, it has been suggested to add sodium lactate to uncooked meat products such as ham and sausage at levels of approximately 1 to 3%. It is suggested that the sodium lactate lowers the water activity ($a_w$) of the foodstuff and has a bacteriostatic effect which results in a better shelf-life during refrigeration, a possibility of storage without refrigeration and a possibility of lowering the sodium chloride content of the foodstuff resulting in a better taste without the decreased shelf-life. In order to achieve the above affects the sodium lactate is added throughout the foodstuff.

It is desired, however, to increase the shelf-life of foodstuffs while using lower levels of additive materials.

Additionally, patent application Serial No. 808,319 discloses that the inclusion of lactate salts throughout the foodstuff delays the bacterial activity of <u>Clostridium botulinum</u>.

## SUMMARY OF THE INVENTION

This invention pertains to a method for preserving cooked meat foodstuffs. The meat is cooked and then surface coated with an amount of a lactate salt effective to extend the shelf-life of the cooked product. The meat is then packaged for distribution.

When this process is employed, the shelf-life of the product is extended while employing relatively lower levels of lactate salt.

## DETAILED DESCRIPTION OF THE INVENTION

The foodstuff of this invention include red meat foodstuffs such as beef and pork and non-red meat foodstuffs such as fish and poultry which includes turkey and chicken.

According to the present invention, the foodstuff is first cooked. The cooking may be any standard cooking procedure, such as, for example, that employed with turkey. The turkey may be cooked in a open oven to an internal temperature above about 155°F and preferably above about 160°F. After the meat has been cooked it is desired to add the lactate salt to the surface of the cooked meat product. The lactate salt may be added to the surface in a variety of ways. For example, it may be sprayed onto the surface of the cooked meat product employing an aqueous solution. When the lactate salt is employed in an aqueous solution the amount of lactate salt in the aqueous solution is preferably from about 30 to about 80 weight percent, or sufficient to achieve from about 0.1% to less than 1.0% lactate salt by weight based on the weight of the cooked meat product.

In another embodiment of this invention the lactate salt may be coated onto the surface by dipping the cooked meat product into a lactate solution. Preferably an aqueous solution is used wherein the lactate salt in the solution is in an amount from about 30 to about 80 weight percent, or sufficient to achieve from about 0.1% to less than 1.0% lactate salt by weight based on the weight of the cooked meat product.

Still a third way of providing a coating to the cooked meat product is to coat a packaging material with lactate salt which is then contacted with the cooked meat product.

A fourth foreseable method is to pour an aqueous solution, as described above, over the cooked meat product.

The amount of lactate salt employed must be in amounts effective for extending the shelf-life of the cooked meat products which is less than the amounts used when injected into the foodstuff. Suitably the shelf-life of the cooked meat product after packaging is greater than 30 days and preferably greater than 70 days. Suitable amount of lactate salt are amounts less than 1% by weight based on the weight of the cooked meat product and preferably amounts greater than 0.1 weight percent but less than 1.0% by weight based on the weight of the cooked meat product.

It has been found that when the lactate salt is coated onto the surface of the meat product rather than distributing the lactate salt throughout the meat product the shelf-life of the cooked meat product can be extended using lesser amounts of sodium lactate salt.

The lactate salt employed may be any suitable lactate salt such as sodium lactate, calcium lactate, potassium lactate and ammonium lactate. It is preferred, however, that sodium lactate be employed. After the cooked meat product has been coated with lactate salt, it is suitably cooled to a temperature of less than 50°F and preferably 32°-35°F. Next the cooked meat product is sealed into a package material, preferably moisture-oxygen barrier package material wherein the meat product is vacuum packed into the barrier material. Suitable packing material include Cryovac$^{TM}$, ethylene vinyl acetate and saran laminates to name a few. The product is then ready for distribution.

It has also been found that while the lactate salt is effective in extending the shelf-life; it is also effective in delaying <u>Clostridium botulinum</u> growth. While <u>Clostridium botulinum</u> growth is a small concern with products that are cooked aerobically and then packaged under aerobic conditions, it is still desired to have materials which inhibit its growth.

The following examples are presented to further illustrate this invention but it is to be understood that the invention is not to be limited to the details described therein.

### EXAMPLE 1

According to this Example 1,000 lbs. of fresh turkey breast were injected with a brine solution comprising 90% water. The turkey breasts ranged from 2.5 to about 3.75 lbs. The turkey breasts were then placed on a rack in an oven and cooked at a high humidity at 160°F dry bulb for two hours and then at 170°F dry bulb until the internal of the turkey breast was about 160°F. After cooking, the turkey breasts were removed from the oven, cut into quarters and then coated with a 60% aqueous solution of sodium lactate onto the cooked product. The coating resulted in products having a surface coating of less than about 1.0% by weight sodium lactate based on the weight of the product. The turkey breasts were then cooled to approximately 32°F and then vacuum packed into moisture-oxygen barrier films of ethylene vinyl acetate and saren laminated material. It was determined that the shelf-life of this product was 56 days.

### EXAMPLE 2

Turkey breasts were prepared as in Example 1 except that the breasts were not cut into quarters and then coated. Similar results were achieved.

### EXAMPLE 3

This example is presented as a control. According to this example 1,000 lbs. of fresh trim turkey breasts are injected with sodium lactate at a weight percent of 2.5% sodium lactate. The turkey breasts range from about 2.5 to about 3.75 lbs. The turkey breasts are injected with a brine solution comprising the following: 69.50% water; 22.49% sodium lactate syrup (60% sodium lactate; 40% water); 6.16% salt and 1.85% sodium phosphate. For each pound of turkey breasts there is injected 0.2274 lbs. of brine using a Townsend Model 1400 type injector.

The turkey breasts are placed on a rack in a oven and cooked at high humidity at 160°F dry bulb, for 2 hours and then at 170°F dry bulb, until the internal temperature of the turkey breasts is 160°F. The oven is turned off, but not opened and a solution of 2 lbs. of a commercial caramel powder and 13 lbs. of water is introduced to the oven through atomizing nozzles along with air over a period of 45 minutes. The turkey breasts are then removed from the oven, chilled and vacuum packaged. The shelf-life of this product was determined to average 42 days, thus showing that the surface coated product of Example I achieved a similar shelf-life using less than 1.0 weight % sodium lactate.

## EXAMPLE 4

In this example, a turkey batter was prepared by grinding turkey breasts and mixing salt at 1.4 wt% and phosphate at 0.49 wt%. Clostridium botulinum spores were added to the turkey batter. The batter was divided into aliquots. Some of the aliquots were designated controls, and no sodium lactate was added. To the other aliquots were added sodium lactate in varying amounts as indicated in Table I below. The inoculated aliquots were vacuum packaged, and water cooked to an internal temperature of 160°F. The cooked turkey products were then cooled to 80°F and incubated at that temperature. Periodically, the product was removed and tested for toxin. The results of the test are shown in Table I.

0250074

## TABLE I

### Effect of Sodium Lactate on C. botulinum in Temperature Abused Cook-In Turkey

| Percent Lactate | Days at 80°F | | | | | | |
|---|---|---|---|---|---|---|---|
| | 2 | 4 | 5 | 7 | 8 | 9 | 10 |
| 0 (Control) | 0/5[a] | 5/5 | | | | | |
| 2.0 | 0/5 | 2/5 | 5/5 | | | | |
| 2.5 | 0/5 | 0/5 | 0/5 | 5/5 | | | |
| 3.0 | 0/5 | 0/5 | 0/5 | 4/5 | 5/5 | | |
| 3.5 | 0/5 | 0/5 | 0/5 | 0/5 | 0/5 | 2/5 | 5/5 |

[a] number of toxic samples/number of samples examined.

From these results it is clear that sodium lactate added at the amounts indicated delays the growth of Clostridium botulinum.

## CLAIMS

1. A method for preserving cooked meat foodstuffs which comprises:

(a) cooking a meat product;

(b) surface coating the cooked meat product with an amount of a lactate salt effective to extend the shelf-life of the cooked meat product; and

(c) packaging the coated meat product.

2. A method according to claim 1 wherein the cooked meat product is selected from the group consisting of beef, pork, poultry and fish.

3. A method according to claim 2 wherein the cooked meat product is poultry.

4. A method according to claim 3 wherein the poultry is turkey.

5. A method according to claim 4 wherein the turkey is cooked to an internal temperature of about 160°F.

6. A method according to claim 1 wherein the cooked meat product is chilled prior to coating with a lactate salt.

7. A method according to claim 6 wherein the meat product is chilled to temperature below about 40°F.

8. A method according to claim 1 wherein the lactate salt is coated onto the meat product by dipping the meat into a lactate solution.

9. A method according to claim 8 wherein the lactate solution is an aqueous solution.

10. A method according to claim 1 wherein the lactate salt is sprayed onto the cooked meat as a lactate solution.

11. A method according to claim 10 wherein the lactate solution is an aqueous solution.

12. A method according to claim 1 wherein the lactate salt is coated onto the surface of the meat by coating the packaging material with a lactate salt in areas of the packaging material contacting the cooked meat.

13. A method according to claim 1 wherein the lactate salt is in amounts of less than 1% by weight based on the weight of the cooked meat product.

14. A method according to claim 13 wherein the lactate salt is in amounts greater than 0.1% by weight but less than 1.0% by weight based on the weight of the cooked meat product.

15. A method according to claim 1 wherein the lactate salt is selected from the group consisting of sodium lactate, calcium lactate, potassium lactate and ammonium lactate.

16. A method according to claim 15 wherein the lactate is sodium lactate.

17. A method according to claim 15 wherein the lactate salt is calcium lactate.

18. A method according to claim 15 wherein the lactate salt is potassium lactate.

19. A method according to claim 15 wherein the lactate salt is ammonium lactate.

20. A method according to claim 1 wherein the meat product is vacuum packed.

21. A product according to claim 1.

22. A method according to claim 20 wherein the shelf-life is 56 days at 40°F.

23. A method according to claim 1 wherein the lactate salt is poured onto the cooked meat as an aqueous lactate solution containing from about 30 to about 80 weight percent lactate salt.